# EUROPÄISCHE PATENTANMELDUNG

(11) **EP 4 527 178 A2**
(43) Veröffentlichungstag der Anmeldung: **26.03.2025**
(21) Anmeldenummer: 24202502.1
(22) Anmeldetag: 25.09.2024
(51) Int. Cl.: A01D 34/73

(54) **KLINGE FÜR EIN MÄHWERK, FÜR EINEN RASENMÄHER UND/ODER FÜR EINE MOTORSENSE**

(30) Priorität: 25.09.2023 DE 102023125879
(71) Anmelder: Huber, Carmen, 6600 Lechaschau (AT)
(72) Erfinder: Huber, Carmen, 6600 Lechaschau (AT)
(74) Vertreter: advotec.

(57) **Zusammenfassung**

Die Erfindung betrifft eine Klinge (01) aufweisend eine Basis (02) und zumindest eine an einer Seite (SB1, SB2, LB1, LB2) der Basis (02) angeordnete und mit der Basis (02) verbundene Schneidkante (03, 04), wobei die Schneidkante (03, 04) zumindest bereichsweise einen ersten Härtegrad und die Basis (02) einen zweiten Härtegrad aufweist, wobei der erste Härtegrad der Schneidkante (03, 04) größer ist als der zweite Härtegrad der Basis (02). Des Weiteren betrifft die Erfindung ein Klingensystem (10) aufweisend eine Klinge (01) sowie ein Befestigungselement (11), das bevorzugt eine Distanzbuchse ist, und ein Befestigungsmittel (12), das bevorzugt eine Schraube (13), insbesondere eine Normschraube ist, sowie ein Mähwerk (20) mit einem Halteelement (21) aufweisend eine Klinge (01) und/oder ein Klingensystem (10).

## Beschreibung

Die Erfindung betrifft eine Klinge für ein Mähwerk, für einen Rasenmäher und/oder eine Motorsense. Weiter betrifft die Erfindung ein Mähwerk, einen Rasenmäher und/oder eine Motorsense mit einer erfindungsgemäßen Klinge.

Klingen bzw. Messer als Grasschneidwerkzeug zur Verwendung in Mähwerken von Rasenmähern und/oder Motorsensen werden nach derzeitigem Stand der Technik aus legierten Kohlenstoffstählen hergestellt, wobei der Härtegrad der Klingen bei ca. 55 HRc bis 59 HRc (Härte nach Rockwell) liegt. Diese Klingen sind zwar weniger bruchanfällig, aber verschleißen sehr schnell. Demzufolge müssen diese Klingen entsprechend oft gewechselt werden. Ebenfalls ist es aus dem Stand der Technik bekannt, dass solche Klingen aus Hochleistungs-Schnellstählen (HSS) hergestellt werden, wobei der Härtegrad üblicherweise bei 64 HRc bis 66 HRc liegt. Diese Klingen haben zwar eine hohe Standzeit bezüglich der Schneidkanten, sind aber gleichzeitig sehr bruchanfällig bei einer Kollision mit Gegenständen oder Hindernissen.

Im Stand der Technik werden weiter Klingenhalteelemente oder Befestigungseinrichtungen für Klingen eingesetzt, wobei die Klinge mit einer in einer Aufnahmebohrung oder in einem Aufnahmeschlitz angeordneten Bundschraube radial und axial beweglich gehalten wird. Die Bundschrauben sind nach dem Stand der Technik entweder nicht oder nur niedrig vergütet, was insbesondere einen hohen Verschleiß zwischen der Aufnahmebohrung oder dem Aufnahmeschlitz der Klinge sowie dem Bund der Bundschraube bedingt. Dieser Verschleiß beeinträchtigt die funktionsbedingt notwendige Beweglichkeit der Klinge gegenüber dem Klingenhalteelement erheblich, was wiederum erfahrungsgemäß zu einer nicht vernachlässigbaren Verschlechterung des Schneidergebnisses und des Mähergebnisses führt. Demzufolge ist es im Stand der Technik notwendig, dass die Bundschraube jeweils zusammen mit der Klinge regelmäßig getauscht werden muss, was weder wirtschaftlich noch nachhaltig ist. Hinzu kommt, dass die nach dem Stand der Technik eingesetzten Bundschrauben teuer und aufwendig in der Herstellung sind, insbesondere bei Fertigung aus einem hoch vergüteten Stahl.

Aufgrund des Vorgenannten besteht eine Aufgabe der vorliegenden Erfindung darin, eine Klinge und/oder ein Klingensystem vorzuschlagen, das verschleißarm und bruchunanfällig ist. Zudem soll der Fertigungs- und Montageaufwand einer derartigen Klinge bzw. eines Klingensystems minimiert werden.

Diese Aufgabe wird auf überraschend einfache aber wirkungsvolle Weise durch eine Klinge nach der Lehre des unabhängigen Anspruchs 1 gelöst. Ferner wird die Aufgabe durch ein Klingensystem mit einer solchen Klinge gelöst. Ebenfalls ist ein Mähwerk mit einer erfindungsgemäßen Klinge und/oder einem erfindungsgemäßen Klingensystem vorgeschlagen.

Erfindungsgemäß ist eine Klinge, aufweisend eine Basis und zumindest eine an einer Seite der Basis angeordnete und mit der Basis verbundene Schneidkante, vorgeschlagen. Die Klinge ist dadurch gekennzeichnet, dass die Schneidkante zumindest bereichsweise einen ersten Härtegrad und die Basis einen zweiten Härtegrad aufweist, wobei der erste Härtegrad der Schneidkante größer ist als der zweite Härtegrad der Basis. Im Rahmen der Erfindung ist die Basis ein von den Schneidkanten und/oder den Schneiden der Schneidkanten abgewandter Körperteil. Bevorzugt ist die Basis zwischen den Schneidkanten angeordnet.

Es hat sich als vorteilhaft erwiesen, wenn die erfindungsgemäße Klinge in einfacher und kostengünstiger Weise aus einem Bimetall oder einem Trimetall gefertigt ist. Mit anderen Worten ist die Klinge bevorzugt aus zumindest zwei Abschnitten, der Basis und zumindest einem Bereich der Schneidkante, die aus unterschiedlichen Materialien, bevorzugt Metallen, gefertigt sind, aufgebaut.

Die Basis kann niedrig vergütet sein und eine Härte von 120 bis 170 HV (Vickers-Härte) aufweisen, und somit robust und bruchfest ausgebildet sein. Die Basis kann daher zur Bearbeitung mit einem Stanzverfahren geeignet sein. Die Schneidkanten können zumindest bereichsweise hoch vergütet sein und/oder aus Hochleistungs-Schnellstahl (HSS) gefertigt sein und/oder eine Härte von 280 bis 320 HV aufweisen. Hierdurch können die Schneidkanten eine hohe Homogenität und eine gute Schleifbarkeit aufweisen.

Dadurch, dass die Basis weicher, das heißt einen geringeren Härtegrad als die Schneidkanten aufweisend, ausgebildet ist, weist die erfindungsgemäße Klinge eine relativ flexible Struktur in der Basis und somit im Verbindungsbereich zu einer Mähvorrichtung, wie einem Mähwerk, einem Rasenmäher oder einer Motorsense, auf, wodurch Belastungen, die beispielsweise aus einer Kollision mit Gegenständen oder Hindernissen herrühren können, kompensiert werden können, so dass Brüche der gattungsgemäßen Klingen verhindert werden können. Demgegenüber weisen die Schneidkanten zumindest bereichsweise einen höheren Härtegrad auf, wodurch diese den Schnittbelastungen über einen langen Zeitraum Stand halten können und somit der Verschleiß und die Häufigkeit des Austauschs der Klingen minimiert werden kann. Beispielsweise kann die gesamte Schneidkante aus einem Material mit einem ersten Härtegrad, der höher ist als der zweite Härtegrad der Basis, gefertigt sein. Es ist jedoch auch denkbar, dass die Schneidkante nur bereichsweise mit einem Material mit einem ersten Härtegrad, der höher ist als der zweite Härtegrad der Basis, verstärkt ist.

Bei einer bevorzugten Ausführungsform der Erfindung kann der erste Härtegrad der Schneidkante um wenigstens 20 %, um wenigstens 30 %, um wenigstens 40 %, um bis zu 50 % größer als der zweite Härtegrad der Basis sein.

Das Breitenverhältnis von Basis zu Schneidkante (Breite Basis : Breite Schneidkante) liegt bevorzugt zwischen 2,5 und 6, liegt weiter bevorzugt zwischen 3,5 und 5 und liegt am meisten bevorzugt zwischen 4 und 4,5, insbesondere bei 4,1. Das Verhältnis von der Länge der Stirnseite der Basis zur Länge der Stirnseite der Klinge liegt bevorzugt zwischen 0,5 und 0,8, weiter bevorzugt zwischen 0,55 und 0,75 und liegt am meisten bevorzugt zwischen 0,6 und 0,7, insbesondere bei 2/3.

Das Verhältnis von Länge der Klinge zu Breite der Klinge (Maß der Längsseite der Klinge : Maß der Stirnseite der Klinge) liegt bevorzugt zwischen 1,3 und 3, liegt weiter bevorzugt zwischen 1,5 und 2,5 und liegt am meisten bevorzugt zwischen 1,8 und 2,2, insbesondere bei 2.

Die Klinge kann bevorzugt 20 mm bis 60 mm lang, weiter bevorzugt 25 mm bis 50 mm lang und am meisten bevorzugt 35 mm bis 40 mm lang sein. Die Klinge kann 36 mm lang sein. Die Klinge ist bevorzugt 8 mm bis 30 mm breit, weiter bevorzugt 12 mm bis 25 mm breit und am meisten bevorzugt 17 mm bis 20 mm, insbesondere 18,8 mm, breit.

Die Klinge, insbesondere die Basis, kann einen plattenförmigen Körper mit einer konstanten Stärke (s) aufweisen. Die Stärke beträgt bevorzugt 0,2 mm bis 3 mm, weiter bevorzugt 0,5 mm bis 1,8 mm und am meisten bevorzugt 0,65 mm bis 1 mm.

Die Schneidkanten der Klinge können durch einen an die Basis anschließenden, insbesondere daran fest angebrachten, vorzugsweise angeschweißten, im Querschnitt spitz zulaufenden Randabschnitt gebildet sein. Die Schneidkante kann einen einseitigen Schneidwinkel oder einen zweiseitigen Schneidwinkel aufweisen. Der Schneidwinkel kann bevorzugt 5° bis 25°, weiter bevorzugt 10° bis 20° und am meisten bevorzugt 15° betragen.

Eine weiche Basis der erfindungsgemäßen Klinge gewährleistet vorteilhafterweise eine gewisse Flexibilität, die die Bruchanfälligkeit der Klinge herabsetzt, während die gegenüber der Basis härteren Schneidkanten hohe Schneidbelastungen verformungsfrei ertragen. Es wurde im Rahmen der Erfindung erkannt, dass die erfindungsgemäße Klinge durch die Wahl der geeigneten Materialien sowie das Verhältnis der Abmessungen von Schneidkante und Basis optimal und individuell an die Belastungsverhältnisse und Anforderungen angepasst werden kann.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen. Es versteht sich, dass die zu der Klinge gemachten Ausführungen sich in äquivalenter Weise auf das erfindungsgemäße Klingensystem beziehen, ohne für dieses separat genannt zu werden. Ebenfalls beziehen sich sämtliche zu der Klinge und dem Klingensystem offenbarten Merkmale und Ausführungsformen in äquivalenter Weise auf das erfindungsgemäße Mähwerk, den erfindungsgemäßen Rasenmäher sowie die erfindungsgemäße Motorsense. Hierbei versteht es sich insbesondere, dass sprachübliche Umformungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden.

Gemäß einer bevorzugten Ausführungsform können die Schneidkanten mindestens zwei gegenüberliegende Seiten der Klinge ausbilden. Bevorzugt bilden die Schneidkanten die Längsseiten der Klinge aus. Demzufolge können die Schneidkanten bevorzugt an gegenüberliegenden Längsseiten der Basis angeordnet sein. Bevorzugt verlaufen die zwei gegenüberliegenden Seiten der Klinge, die durch die Schneidkanten ausgebildet sind, parallel zueinander. Weiter bevorzugt ist die Basis in Draufsicht als Rechteck mit zwei Stirnseiten der Basis und zwei Längsseiten der Basis ausgebildet. Es ist denkbar, dass auch die Klinge als Rechteck ausgebildet ist, wobei je eine Stirnseite der Klinge benachbart zu zwei Längsseiten der Klinge angeordnet ist.

Gemäß einer besonders bevorzugten Ausführungsform kann die Klinge als Wellenklinge ausgebildet sein. Die als Wellenklinge ausgebildete Klinge weist eine nicht lineare, wellenförmige Schneidkante oder Schneide auf. Eine wellenförmige Schneidkante der Wellenklinge weist zumindest eine Welle auf, wobei jede Welle einen Wellenberg, der bevorzugt als Außenbogen ausgebildet ist, und ein Wellental, das bevorzugt als Innenbogen ausgebildet ist, umfasst. Vorzugsweise sind die Wellen über die gesamte Länge der Klinge bzw. im Wesentlichen über die gesamte Länge der Schneidkante angeordnet. Bevorzugt weist die Schneidkante der Wellenklinge zumindest zwei Wellenberge und ein Wellental auf. Die Wellenform der Schneidkante kann durch Schleifen unter Einsatz einer entsprechend abgerichteten Schleifscheibe einfach und wirtschaftlich ausgebildet werden. Im Rahmen der Erfindung schließt der Begriff "Wellenklinge" neben einer wellenförmigen Ausgestaltung der Schneidkante auch eine zickzackförmige Ausgestaltung der Schneidkante ein. Die Ausbildung der Klinge als Wellenklinge ergibt vorteilhafterweise einen sogenannten ziehenden Schnitt, der zu einem wesentlich besseren Schnittergebnis, insbesondere Mähergebnis, und zu einer wesentlich verbesserten Schneidhaltigkeit der Schneidkanten führt, da das Schnittgut nur im Bereich zumindest eines Schneidbereichs sauber geschnitten wird, und nicht, wie aus dem Stand der Technik bekannt, durch sich geradlinig bzw. linear entlang der Basis erstreckende Schneidkanten abgeschlagen wird. Bevorzugt weist jede Schneidkante zumindest zwei Schneidbereiche auf, so dass eine Klinge mit zwei Schneidkanten zumindest vier Schneidbereiche aufweist. Ein weiterer Vorteil der Ausbildung der Klinge als Wellenklinge liegt darin, dass durch den Innenbogen der Wellenform, d. h. mit anderen Worten durch das Wellental, das Schnittgut, insbesondere Gras, mitgenommen und geführt abgeleitet werden kann. Weiter ist es denkbar, dass eine Längsseite der Klinge mit einer Stirnseite der Klinge über ein Wellental der Wellenklinge verbunden ist, um die Bruchempfindlichkeit der Klinge herabzusetzen. D. h. mit anderen Worten, dass der Verlauf der an der Längsseite der Klinge befindlichen wellenförmigen Schneidkante mit einem Wellental, insbesondere einem Tiefpunkt des Wellentals, beginnt und ab schließt.

Die Schneidkante kann im Schneidbereich einen ersten Härtegrad aufweisen. Der Schneidbereich erstreckt sich bevorzugt im Bereich des Wellenbergs, der bevorzugt durch einen Außenbogen gebildet ist, über den jeweiligen Übergang, bevorzugt tangentialen Übergang, von dem Wellental, das bevorzugt durch einen Innenbogen gebildet ist, auf den Wellenberg, und/oder über den gesamten Wellenberg. Bevorzugt ist die Schneidkante eine nicht lineare, begrenzte und/oder bogenförmige Schneidkante. Weiter bevorzugt ist der Schneidbereich nicht linear, begrenzt und/oder bogenförmig ausgebildet. Der Begriff "Schneidbereich" meint im Rahmen der Erfindung insbesondere den beim Schneidvorgang in unmittelbarem Kontakt zu dem Schnittgut stehenden Bereich der Schneidkante. Im Rahmen der Erfindung hat es sich als vorteilhaft erwiesen, lediglich die Schneidbereiche aus einem Material mit einem ersten Härtegrad, der höher ist als der Härtegrad der Basis, auszubilden. So kann in einfacher und wirtschaftlicher Art und Weise eine Verstärkung der Schneidkanten anforderungsgerecht, vorliegend in einem nicht linearen, begrenzten, bogenförmigen und/oder punktuellen Bereich erfolgen. Mit anderen Worten kann die Basis sowie ein Großteil der Schneidkante aus einem Material mit einem zweiten Härtegrad hergestellt sein, wobei das Material mit einem höheren ersten Härtegrad nur im Schneidbereich eingesetzt werden muss. Bevorzugt weist die Klinge zwei Schneidkanten mit je zwei Schneidbereichen auf, in deren Bereich, d.h. in deren unmittelbarer Umgebung, die Schneidkante einen ersten Härtegrad aufweist.

Die Basis und die zumindest eine Schneidkante können miteinander verschweißt sein. Das Verschweißen ermöglicht eine kostengünstige sowie widerstandsfähige Verbindung von Basis und Schneidkante. Basis und Schneidkante sind bevorzugt aus einem metallischen Werkstoff gefertigt, um ein einfaches Verschweißen zu ermöglichen.

Um den Fertigungsaufwand zu minimieren, können die Basis und die zumindest eine Schneidkante aus unterschiedlichen Metallbändern hergestellt sein. Erfindungsgemäß weist das Metallband, aus dem die Basis hergestellt ist, eine geringere Härte als das Metallband, aus dem die Schneidkante hergestellt ist, auf. Sofern eine Schneidkante an der Basis angeordnet ist, kann die Klinge in besonders einfacher Art und Weise aus einem Bimetall-Band hergestellt sein. Ein derartiges Bimetall-Band besteht aus zwei miteinander verbundenen Metallbändern, wobei die beiden Metallbänder aus unterschiedlichen Werkstoffen hergestellt sind. Sofern die Basis zwei Schneidkanten, insbesondere an jeder Längsseite der Basis eine Schneidkante, aufweist, kann die Klinge bevorzugt aus einem Trimetall-Band gefertigt sein. Das Trimetall-Band ist aus drei Metallbändern zusammengefügt, wobei sich die Werkstoffe zumindest zweier Metallbänder unterscheiden. Bevorzugt weist ein derartiges Trimetall-Band zwei Außenabschnitte, die die Schneidkante ausbilden können, und einen gegenüber den Außenabschnitten weniger harten Mittelabschnitt, der die Basis ausbilden kann, auf.

Im Rahmen der Erfindung wurde es erkannt, dass die Ecken der Klinge, die am Stoß von Längsseite und Stirnseite der Klinge ausgebildet sind, äußerst bruchempfindlich sein können. Um das Bruchverhalten der Klinge zu optimieren, kann zumindest eine Längsseite der Klinge mit einer Stirnseite der Klinge durch eine Rundung und/oder Fase verbunden sein. Dies bedeutet mit anderen Worten, dass Längsseite und Stirnseite der Klinge keine, insbesondere keine rechtwinklige, Ecke ausbilden, sondern durch die Fase oder Rundung getrennt sind. Bevorzugt erfolgt jede Verbindung von Längsseite und Stirnseite der Klinge durch eine Rundung und/oder Fase. Weiter bevorzugt weist die Klinge vier Fasen oder vier Rundungen auf. Durch die erfindungsgemäße Ausbildung von Rundungen und/oder Fasen an der Klinge kann die Bruchempfindlichkeit der Klinge herabgesetzt und ein Ausbrechen einer oder mehrerer Ecken der Klinge verhindert werden. Dadurch kann auch eine im Betrieb unerwünschte Störung der Gleichgewichtslage der Klinge durch abgebrochene Ecken verhindert werden. Eine Störung der Gleichgewichtslage der Klinge lässt im Mähwerk eine Unwucht entstehen, die sich negativ auf die Laufruhe und auf die Lagerelemente auswirkt. Da durch die erfindungsgemäße Ausbildung der Klinge ein Bruch an den Ecken der Klinge verhindert werden kann, kann auch eine Unwucht im Mähwerk verhindert werden, wodurch vorteilhafterweise die Laufruhe aufrechterhalten und der Verschleiß des Mähwerks, insbesondere der Lagerelemente des Mähwerks, minimiert werden kann. Die Fasen der Klinge können beispielsweise durch definiertes und gleichmäßiges Brechen einer rechteckigen Klinge gefertigt werden.

Um die Klinge möglichst widerstandsfähig auszubilden, kann die Klinge eine achteckige Form aufweisen. Bevorzugt ist die Achteckform der Klinge derart ausgebildet, dass die Längsseiten der Klinge gegenüberliegend, parallel zueinander verlaufend, angeordnet sind und die Stirnseiten der Klinge ebenfalls gegenüberliegend und parallel zueinander angeordnet sind. Die die Längsseiten und die Stirnseiten verbindenden Seiten der Klinge können im Rahmen der Erfindung als Fasenseiten bezeichnet sein, wobei die Länge der Fasenseite gemäß einer besonders bevorzugten Ausführungsform kürzer als die Länge der Stirnseite und kürzer als die Länge der Längsseite der Klinge ist. Hierdurch kann vorteilhafterweise die Bruchempfindlichkeit der Klinge, insbesondere der Ecken, die zwischen den benachbarten Längsseiten und Stirnseiten bei rechteckiger Ausbildung der Klinge ausgebildet sind, vermindert oder beseitigt werden.

Sowohl Stirnseite der Klinge und Fasenseite als auch Längsseite der Klinge und Fasenseite können in einem spitzen Winkel zueinanderstehen, wodurch auf die Ausbildung rechtwinkliger Ecken verzichtet werden kann und die Standzeit der Klinge deutlich erhöht werden kann sowie die Nachteile einer gestörten Gleichgewichtslage der Klinge am Mähwerk vermieden werden können.

In die Basis kann eine die Klinge durchgreifende Aussparung zur Halterung der Klinge, beispielsweise an einem Mähwerk, eingebracht sein. Die Herstellung der Aussparung, die als Bohrung und/oder Schlitz ausgebildet sein kann, kann mittels Glattschnitt- und/oder Feinschneidverfahren erfolgen, wodurch eine hohe Oberflächengüte und Maßgenauigkeit erzielt werden können, die dem Verschleiß der Aussparung sowie ggf. einer korrespondierenden Oberfläche eines Befestigungselements entgegenwirken. Es ist denkbar, dass die Klinge zumindest zwei Aussparungen, insbesondere Bohrungen, aufweist. Die Aussparung lässt ein Wenden der Klinge und die Aufnahme eines Befestigungsmittels und/oder Befestigungselements zu. Die die Klinge durchgreifende Aussparung kann schlitzförmig ausgebildet sein und/oder als Bohrung ausgebildet sein. Es ist denkbar, dass die schlitzförmige Aussparung ein Langloch ist. Es ist bekannt, dass ein Langloch derart ausgebildet ist, dass dessen schmale Seiten durch Halbkreise abgeschlossen sind, wobei die Durchmesser der Halbkreise der Breite des Langlochs entsprechen. Durch die schlitzförmige Aussparung kann die Klinge beispielsweise mit einer Schraube am Mähwerk befestigt sein und sowohl radial als auch axial beweglich gehalten werden. Die langen Seiten des Schlitzes und/oder des Langlochs können parallel zueinander und/oder parallel zur Stirnseite oder Längsseite der Klinge verlaufen.

Die Mittelachse oder Symmetrieachse der Aussparung kann mit der Mittelachse oder Symmetrieachse der Klinge zusammenfallen.

Es hat sich als vorteilhaft erwiesen, wenn sich die Aussparung entlang einer Kurve, insbesondere einer sinusförmigen Kurve, erstreckt. Die, bevorzugt schlitzförmige, Aussparung erstreckt sich nicht durchgängig entlang der Mittelachse, sondern ist vielmehr, bevorzugt symmetrisch, aus der Mittelachse der Klinge versetzt. Bevorzugt erstreckt sich die Aussparung entlang einer sinusförmigen Kurve. Weiter bevorzugt liegt der Wendepunkt der sinusförmigen Kurve auf der Mittelachse und/oder der Symmetrieachse der Klinge. Die Aussparung kann als Langloch, das sich entlang einer Kurve erstreckt, ausgebildet sein, wobei die Aussparung an deren Enden mit einem Halbkreis abschließt und/oder in einer kreisförmigen Bohrung endet. Die kurvenförmige, in der Art eines Schlitzes ausgebildete Aussparung kann nicht parallel zu den Schneidkanten der Klinge verlaufen, sondern die Enden der Aussparung können symmetrisch aus der Mittelachse der Klinge versetzt sein. Bevorzugt sind die Enden der Aussparung um 0,5 mm bis 5 mm, weiter bevorzugt um 1 mm bis 3mm und am meisten bevorzugt um 1,5 mm aus der Mittelachse der Klinge versetzt. Die schlitzförmige Aussparung ist bevorzugt 10 mm bis 40 mm lang, weiter bevorzugt 15 bis 30 mm lang und am meisten bevorzugt 20 bis 25 mm lang. Die schlitzförmige Aussparung ist bevorzugt 2 mm bis 15 mm breit, weiter bevorzugt 3 bis 10 mm breit und am meisten bevorzugt 4 bis 7 mm, insbesondere 5 mm, breit.

Die erfindungsgemäße Erstreckung der Aussparung entlang einer Kurve, von einer Geraden abweichend, kann eine schlagartig auftretende Bewegung der Klinge in axialer Richtung, beispielsweise beim Auftreffen der Klinge auf einen Gegenstand oder ein Hindernis, abbremsen. Dadurch, dass die Klinge, insbesondere bei Verbindung der Klinge über eine Schraube mit dem Mähwerk, beim Auftreffen auf ein Hindernis entlang des Kurvenverlaufs der Aussparung geführt wird, kann durch die kurvenförmige Aussparung eine Stoßdämpfung erzielt werden. Zudem wird durch die kurvenförmige Aussparung bei unerwünschtem Auftreffen der Klinge auf ein Hindernis und der damit verbundenen Axialbewegung der Klinge an einem Befestigungsmittel bzw. am Mähwerk eine Drehbewegung der Klinge eingeleitet, welche die Schneidkanten in vorteilhafter Weise vom mit der Klinge kollidierten Gegenstand weg bewegt. Somit können durch die vorteilhafte Ausführungsform, gemäß der sich die Aussparung entlang einer Kurve erstreckt, die Bruchanfälligkeit der Klinge sowie der Verschleiß am Mähwerk, insbesondere eines Halteelements, Befestigungsmittels und/oder Befestigungselements, erheblich reduziert werden.

In einem zweiten Aspekt betrifft die Erfindung ein Klingensystem aufweisend eine erfindungsgemäße Klinge sowie ein Befestigungselement und ein Befestigungsmittel, wobei das Befestigungselement und/oder das Befestigungsmittel die Klinge zur Befestigung der Klinge an einem Halteelement eines Mähwerks durchgreifen kann.

Das Befestigungsmittel kann an einem Halteelement des Mähwerks fixiert und die Klinge somit in gewünschter Lage am Mähwerk befestigt werden. Das Befestigungselement kann dem Schutz von Klinge und Befestigungsmittel dienen. Das Befestigungsmittel kann als Bolzen, Schraube, Stift, Niete oder Klammer ausgebildet sein. Bevorzugt ist das Befestigungselement zwischen Klinge, insbesondere Basis der Klinge, und Befestigungsmittel angeordnet. Die Kombination aus Befestigungsmittel, Befestigungselement und erfindungsgemäßer Klinge erlaubt somit einen verschleißarmen Einsatz der Klinge sowie des Befestigungsmittels und zudem eine sichere Positionierung bzw. Befestigung der Klinge an einem Mähwerk.

Das Befestigungsmittel und/oder die Basis können einen geringeren Härtegrad als das Befestigungselement aufweisen. Mit anderen Worten kann das Befestigungselement härter ausgebildet sein als das Befestigungsmittel und/oder die Basis. Somit kann, sofern das Befestigungselement zwischen Basis und Befestigungsmittel angeordnet ist, das Befestigungselement den Verschleiß der Basis der Klinge und des Befestigungsmittels reduzieren, da ein direkter Kontakt zwischen Basis und Befestigungsmittel verhindert wird. Bei aus dem Stand der Technik bekannten Klingensystemen wird das Befestigungsmittel in der Regel als Verschleißteil angesehen und muss regelmäßig ausgetauscht werden. Im Rahmen der Erfindung wurde es erkannt, dass ein Befestigungselement, insbesondere ein Befestigungselement, das einen höheren Härtegrad als die Basis und/oder das Befestigungsmittel aufweist, die Standzeit des Befestigungsmittels und/oder der Klinge wesentlich erhöht.

Sofern das Befestigungselement gehärtet wurde, kann dessen Verschleiß so weit reduziert sein, dass auch ein Austausch des Befestigungselements vorteilhafterweise nicht notwendig wird. Sofern das Befestigungselement zylinderförmig, beispielsweise als Distanzhülse, ausgeführt ist, kann eine Spielpassung zwischen Befestigungselement und Aussparung in der Klinge ausgeführt sein. Auch ist es denkbar, dass eine Gleitpassung zwischen Befestigungselement und Aussparung der Klinge ausgebildet ist. Das Befestigungselement kann eine Höhe aufweisen, die größer ist als die Stärke der Klinge.

Das Befestigungselement kann das Befestigungsmittel zumindest teilweise, bevorzugt vollständig, umgreifen. Insbesondere, wenn das Befestigungsmittel rotationssymmetrisch ausgebildet ist, kann auch das Befestigungselement rotationssymmetrisch ausgebildet sein und das Befestigungsmittel umgreifen, um einen zuverlässigen Schutz des Befestigungsmittels zu gewährleisten. Gemäß einer bevorzugten Ausführungsform durchgreifen sowohl das Befestigungselement als auch das Befestigungsmittel die Klinge, wobei das Befestigungselement zumindest einen entlang der Längsachse des Befestigungsmittels verlaufenden Abschnitt des Befestigungsmittels, beispielsweise einen Abschnitt des Schafts einer Schraube, vollständig umgreift.

Um eine möglichst einfache Montage des Klingensystems zu ermöglichen, kann das Befestigungselement einen minimalen Innendurchmesser aufweisen, der größer ist als der Außendurchmesser des Befestigungsmittels, so dass das Befestigungsmittel zumindest teilweise in das Befestigungselement einschiebbar ist. Bevorzugt kann das Befestigungsmittel zum Eingriff in das Mähwerk bzw. das Halteelement des Mähwerks bis zu einer gewünschten Tiefe durch das Befestigungselement hindurchgeschoben werden. Beispielsweise ist es denkbar, sofern das Befestigungsmittel als Schraube ausgebildet ist, dass das Befestigungsmittel so weit in das Befestigungselement eingeschoben wird, bis der Schraubenkopf am Befestigungselement zur Anlage kommt. Gemäß einer weiter bevorzugten Ausführungsform kann das Befestigungselement in eine Aussparung der Klinge eingeschoben werden, und das Befestigungsmittel kann in das Befestigungselement eingeschoben werden.

Es hat sich als vorteilhaft erwiesen, wenn die Klinge gegenüber dem Befestigungsmittel und/oder dem Befestigungselement radial und/oder axial frei beweglich ist. Mit anderen Worten kann die Klinge nach Befestigung der Klinge am Halteelement eines Mähwerks gegenüber dem Befestigungsmittel und/oder Befestigungselement verdreht und/oder entlang der Aussparung, die bevorzugt vom Befestigungselement und vom Befestigungsmittel durchgriffen wird, verschoben werden. Dies verringert den Verschleiß wesentlich und erhöht die Lebensdauer der Klinge.

Das Befestigungselement kann eine Distanzbuchse sein. Bevorzugt ist das Befestigungselement eine gehärtete Distanzbuchse. Weiter bevorzugt ist die Distanzbuchse in der Art eines offenen Hohlzylinders ausgebildet. Durch diese geometrische Ausgestaltung kann die Distanzbuchse in einfacher Art und Weise ein rotationssymmetrisches Befestigungsmittel zumindest abschnittsweise umgreifen und zuverlässig schützen.

Das Befestigungselement kann in einem Stanz- und/oder Biegeverfahren hergestellt sein. Bevorzugt kann das Befestigungselement, insbesondere, wenn dieses als Distanzhülse ausgebildet ist, mittels eines kostengünstigen Stanzverfahrens aus einem Blechstreifen hergestellt sein. Das Befestigungselement kann nach der Herstellung vergütet und/oder gehärtet sein. Es ist auch denkbar, dass das Befestigungselement aus einem Vergütungsstahl hergestellt ist.

Um das Klingensystem besonders aufwandsarm und kostengünstig bereitzustellen, kann das Befestigungsmittel eine Schraube, insbesondere eine Normschraube, sein. Bevorzugt kann das Befestigungsmittel eine Normschraube ohne Bund oder Ansatz sein. Dadurch, dass das Befestigungsmittel durch das Befestigungselement geschützt ist, sind nicht länger besondere Anforderungen an das Befestigungsmittel gestellt. Daher kann das Befestigungsmittel in besonders einfacher Art und Weise auch eine Normschraube sein und muss nicht, wie aus dem Stand der Technik bekannt, eine speziell ausgeführte und aufwendig herzustellende Bundschraube sein. Hierbei kann eine Kostengegenüberstellung derart ausfallen, dass das Befestigungselement und das als Normschraube ausgebildete Befestigungsmittel zusammen günstiger herzustellen oder zu erwerben sind als die gattungsgemäß eingesetzte Bundschraube. Somit ist nicht nur die Lebensdauer des Klingensystems erhöht, sondern auch ein wirtschaftlicher Vorteil erzielbar.

Die Klinge kann derart an dem Befestigungselement angeordnet sein, dass die Klinge bei örtlicher Festlegung der Klinge am Halteelement um das Befestigungselement rotierbar ist und/oder gegenüber dem Befestigungselement verschiebbar ist. Gemäß einer bevorzugten Ausführungsform kann das Befestigungselement, bevorzugt eine Distanzhülse, zur Aufnahme eines Befestigungsmittels, bevorzugt einer Schraube, ausgeführt sein. Hierzu kann das Befestigungselement ein Innengewinde aufweisen, das mit einem Außengewinde des Befestigungsmittels in Eingriff kommen kann, um die Klinge am Halteelement des Mähwerks zu befestigen. Gemäß dieser Ausführungsform kann das Befestigungsmittel auch als Schraube ohne Bund ausgeführt sein. Das Befestigungselement kann aufgrund der Verbindung über dessen Innengewinde mit dem Außengewinde des am Halteelement des Mähwerks festgelegten Befestigungsmittels unbeweglich am Mähwerk fixiert sein, so dass die Klinge um das Befestigungselement rotieren kann und/oder gegenüber dem Befestigungselement verschoben werden kann.

Das erfindungsgemäße Mähwerk, mit einem Halteelement, weist zumindest eine erfindungsgemäße Klinge und/oder ein erfindungsgemäßes Klingensystem auf.

Der erfindungsgemäße Rasenmäher weist eine erfindungsgemäße Klinge und/oder ein erfindungsgemäßes Klingensystem und/oder ein erfindungsgemäßes Mähwerk auf.

In einem weiteren Aspekt betrifft die Erfindung eine Motorsense, die eine erfindungsgemäße Klinge und/oder ein erfindungsgemäßes Klingensystem und/oder ein erfindungsgemäßes Mähwerk aufweist.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Ebenfalls versteht es sich, dass die zuvor genannten und nachstehend noch zu erläuternden Ausführungsformen und Ausführungsbeispiele sich in äquivalenter oder zumindest ähnlicher Art und Weise auf das erfindungsgemäße Verfahren beziehen, ohne für dieses separat genannt zu werden.

Ausführungsformen der Erfindung sind in den Zeichnungen schematisiert dargestellt und werden nachfolgend beispielhaft erläutert.

Bevorzugte Ausführungsformen sind in den Fig. 1 bis 6 gezeigt.

Es zeigen
- **Fig. 1**: eine erste Ausführungsform einer erfindungsgemäßen Klinge in Draufsicht;
- **Fig. 2**: die erfindungsgemäße Klinge gemäß Fig. 1 im Querschnitt;
- **Fig. 3**: eine zweite Ausführungsform einer erfindungsgemäßen Klinge in Draufsicht;
- **Fig. 4**: eine dritte Ausführungsform einer erfindungsgemäßen Klinge in Draufsicht;
- **Fig. 5**: ein erfindungsgemäßes Klingensystem in Schnittansicht;
- **Fig. 6**: ein Mähwerk mit dem Klingensystem gemäß Fig. 5 in Schnittansicht;
- **Fig. 7**: eine vierte Ausführungsform einer erfindungsgemäßen Klinge in Draufsicht;
- **Fig. 8**: die erfindungsgemäße Klinge gemäß Fig. 7 in isometrischer seitlicher Ansicht; und
- **Fig. 9**: die erfindungsgemäße Klinge gemäß Fig. 7 in isometrischer Ansicht von vorne.

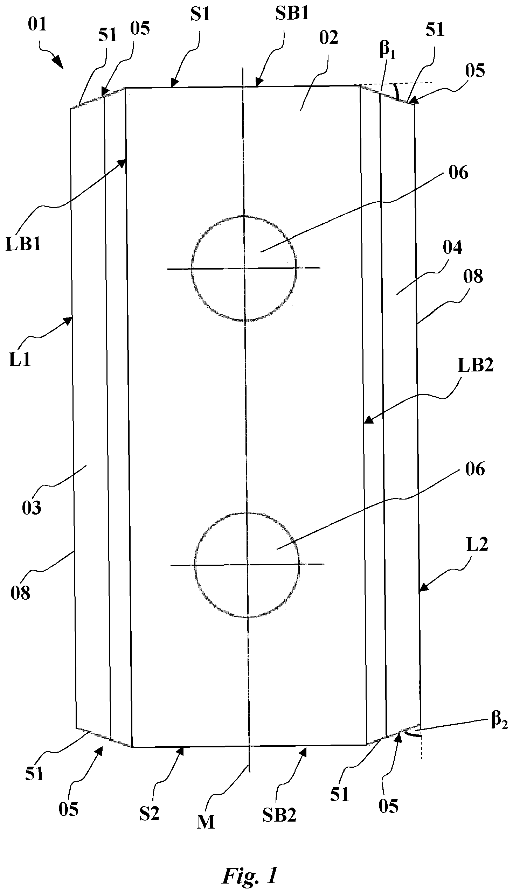

**Fig. 1** zeigt eine erfindungsgemäße Klinge 01 aufweisend eine Basis 02 und seitlich der Basis 02 angeordnete Schneidkanten 03 und 04 in Draufsicht. Die Schneidkanten 03, 04 sind an den Längsseiten LB1, LB2 der Basis angeordnet und bilden die Längsseiten L1, L2 der Klinge 01 aus.

Die von den Längsseiten L1 und L2 sowie den Stirnseiten S1 und S2 eingeschlossenen Ecken sind abgefast und weisen somit eine Fase 05 auf.

Die Klinge 01 hat somit in Draufsicht eine achteckige Form. Die durch die Fasen ausgebildeten Fasenseiten 51 stehen jeweils in einem spitzen Winkel zu einer Stirnseite S1, S2 der Klinge bzw. zu einer Stirnseite SB1, SB2 der Basis. Der spitze Winkel ist anhand der Winkel β₁ und β₂ exemplarisch an zwei Fasenseiten 51 veranschaulicht. Zur Befestigung der Klinge 01, beispielsweise an einem hier nicht dargestellten Mähwerk, sind zwei Aussparungen 06, die als Bohrung ausgebildet sind, in die Basis 02 der Klinge 01 eingebracht.

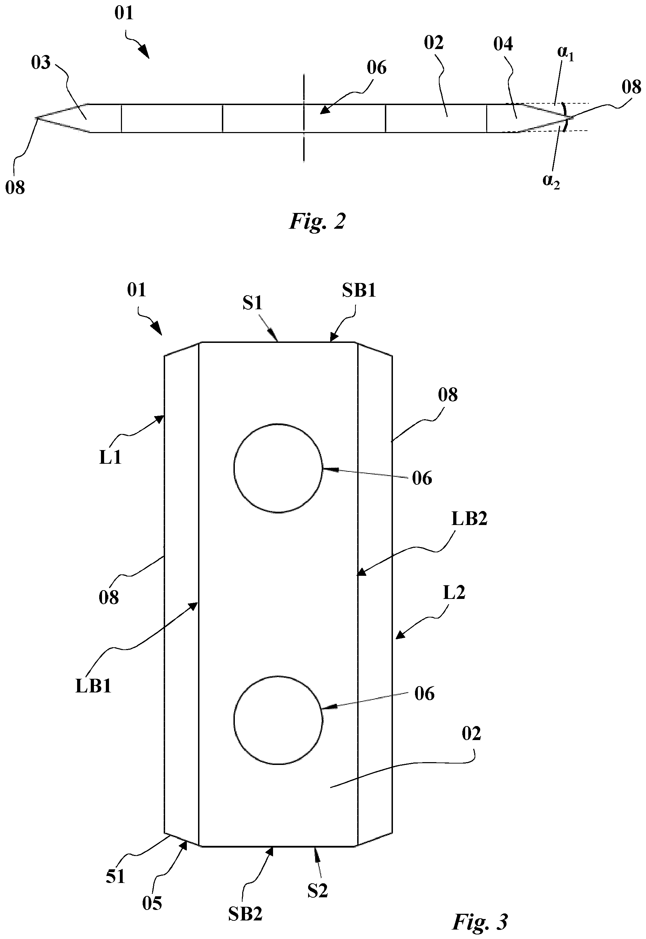

**Fig. 2** zeigt die Klinge 01 gemäß der mit Fig. 1 gezeigten Ausführungsform im Querschnitt. Wiederum sind die Basis 02 und die seitlich der Basis 02 angeordneten Schneidkanten 03 und 04 zu erkennen. Die der Befestigung der Klinge 01 an einem nicht dargestellten Mähwerk dienenden Aussparungen 06 sind die Basis 02 durchgreifend eingebracht. Die Schneidkanten 03, 04 weisen einen zweiseitigen Schneidwinkel auf. Dies ist schematisch anhand der Schneidwinkel α₁ und α₂ angedeutet. Die Basis 02, die zwischen den Schneidkanten 03 und 04 angeordnet ist, weist einen geringeren Härtegrad als die Schneidkanten 03 und 04 auf.

Auch **Fig. 3** zeigt eine erfindungsgemäße Klinge 01 mit zwei als Bohrungen ausgeführten Aussparungen 06 zur Befestigung der Klinge 01 an einem nicht dargestellten Mähwerk. Die Basis 02, die zwischen den Schneidkanten 03 und 04 angeordnet ist, weist einen geringeren Härtegrad als die Schneidkanten 03 und 04 auf. Um das Risiko eines Bruchs der Klinge 01, insbesondere der Schneidkanten 03 und 04, bei ungewolltem Kontakt mit einem Gegenstand zu reduzieren, weist die erfindungsgemäße Klinge 01 an den Stellen, an denen die Längsseiten der Klinge L1 und L2 auf die Stirnseiten der Klinge S1 und S2 treffen, jeweils eine Fase 05 auf.

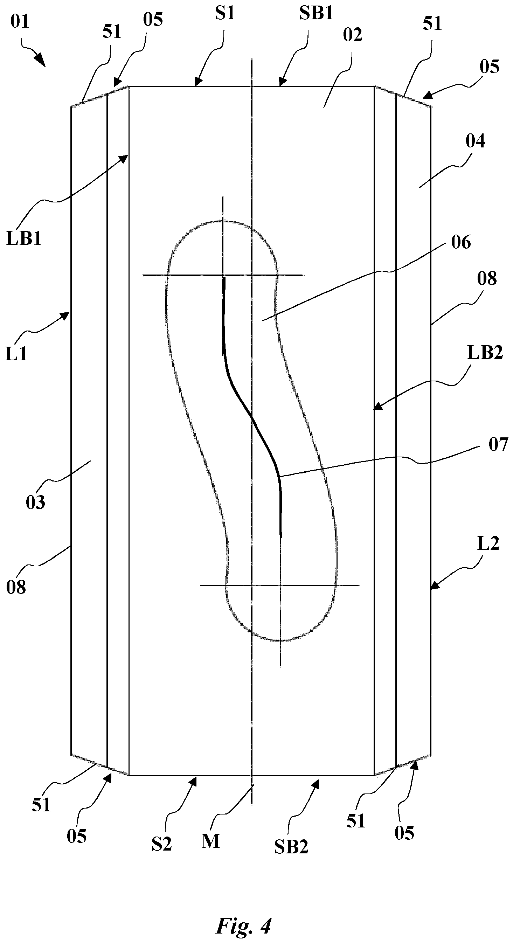

**Fig. 4** zeigt eine weitere Ausführungsform einer Klinge 01. Im Wesentlichen ist die Klinge 01 gemäß Fig. 4 identisch zu den Klingen 01 gemäß den Fig. 1 bis 3 ausgebildet, wobei die Aussparung 06 unterschiedlich zu den Aussparungen 06 der Klingen 01 gemäß den Fig. 1 bis 3 ausgestaltet ist. Die Aussparung 06 gemäß Fig. 4 ist in der Art eines Schlitzes oder Langlochs ausgebildet und weist einen kurvenförmigen Verlauf auf. Es ist erkennbar, dass sich die Aussparung 06 entlang der Kurve 07, die bevorzugt sinusförmig ausgebildet ist, erstreckt. Die schlitzförmige Aussparung 06 erstreckt sich nicht durchgängig parallel zur Mittelachse M, sondern ist teilweise aus der Mittelachse M der Klinge 01 versetzt, da sich die Aussparung 06 entlang einer sinusförmigen Kurve 07 erstreckt. Es ist erkennbar, dass der Wendepunkt der sinusförmigen Kurve 07 auf der Mittelachse M, die vorliegend mit der Symmetrieachse der Klinge 01 zusammenfällt, liegt. Die Aussparung 06 schließt an ihren Enden mit einem Halbkreis ab. Diese Enden der Aussparung 06 sind symmetrisch aus der Mittelachse M der Klinge 01 versetzt angeordnet.

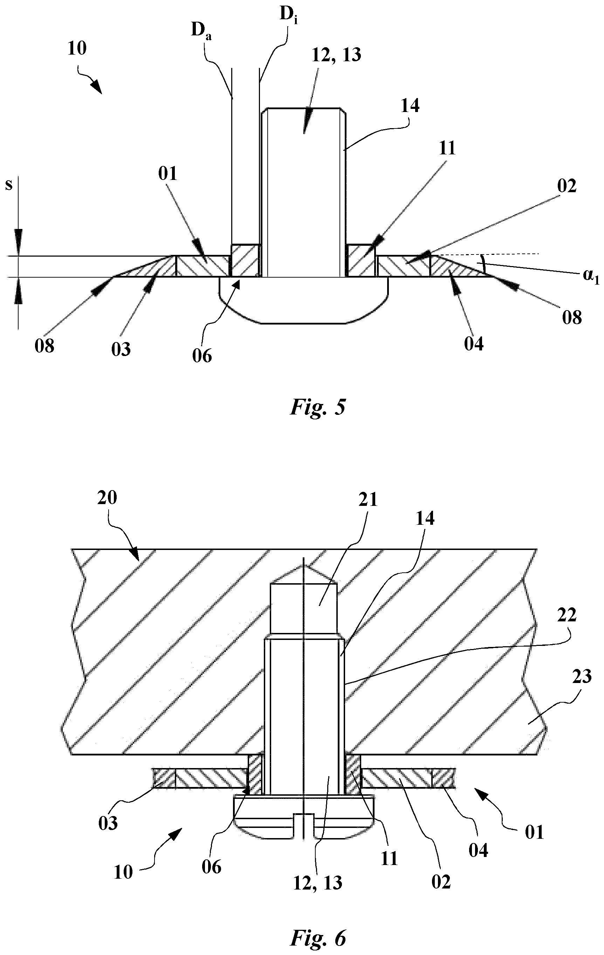

**Fig. 5** zeigt ein Klingensystem 10 aufweisend eine Klinge 01 sowie ein Befestigungselement 11 und ein Befestigungsmittel 12, wobei das Befestigungsmittel als Schraube 13 ausgebildet ist. Die Schraube 13 durchgreift das als Distanzhülse ausgebildete Befestigungsmittel 11 und kann mit ihrem Gewindeabschnitt 14 und/oder Schaft in eine hier nicht dargestellte Bohrung, beispielsweise eines Halteelements eines Mähwerks, eingreifen. Das Befestigungselement 11 wiederum durchgreift die Klinge 01 innerhalb der Aussparung 06. Hierzu weist das Befestigungselement 11 einen Innendurchmesser Dᵢ, der größer als der Außendurchmesser des Gewindeabschnitts 14 und/oder des Schafts der Schraube 13 ist, und einen Außendurchmesser Dₐ, der kleiner als der Innendurchmesser der Aussparung 06 ist, auf. Befestigungselement 11 und Klinge 01 sind derart zueinander angeordnet, dass bei Befestigung der Klinge 01 an einem Mähwerk die Klinge 01 weiterhin frei rotierbar um das Befestigungsmittel 12 oder verschiebbar gegenüber dem Befestigungsmittel 12 ist. Die Klinge 01 weist eine Basis 02, in die die Aussparung 06 eingebracht ist, auf. Seitlich der Basis 02 sind wiederum die Schneidkanten 03 und 04 mit ihren jeweiligen Schneiden 08 angeordnet. Die Klinge 01 weist im Bereich der Basis 02 eine konstante Stärke s bzw. Dicke auf. Gemäß Fig. 5 weist die Klinge 01, insbesondere die Schneidkanten 03 und 04, einen einseitigen Schneidwinkel α₁ auf.

Mit **Fig. 6** ist ein erfindungsgemäßes Mähwerk 20 aufweisend ein Klingensystem 10 mit einer erfindungsgemäßen Klinge 01 gezeigt. Das als Distanzhülse ausgebildete Befestigungselement 11 durchgreift die Klinge 01 und wird selbst von dem als Schraube 13 ausgebildeten Befestigungsmittel 12 durchgriffen. Zur Befestigung der Klinge 01 an einem Halteelement 23 des Mähwerks 20 greift die Schraube 13 mit ihrem Gewinde 14 in eine Bohrung 21 des Halteelements 23 des Mähwerks 20 ein, wobei das Außengewinde 14 der Schraube 13 zur Sicherung der Klinge 01 mit einem Innengewinde 22 der Bohrung 21 zusammenwirkt. Die Klinge 01 ist, wie vorab beschrieben, aus einer einen geringeren Härtegrad aufweisenden Basis 02 sowie den einen höheren Härtegrad im Vergleich zur Basis 02 aufweisenden Schneidkanten 03 und 04 aufgebaut. Das Befestigungselement 11, das vorliegend als Distanzhülse ausgebildet ist, kann einen höheren Härtegrad als die Basis 02 und/oder als die Schraube 13 aufweisen.

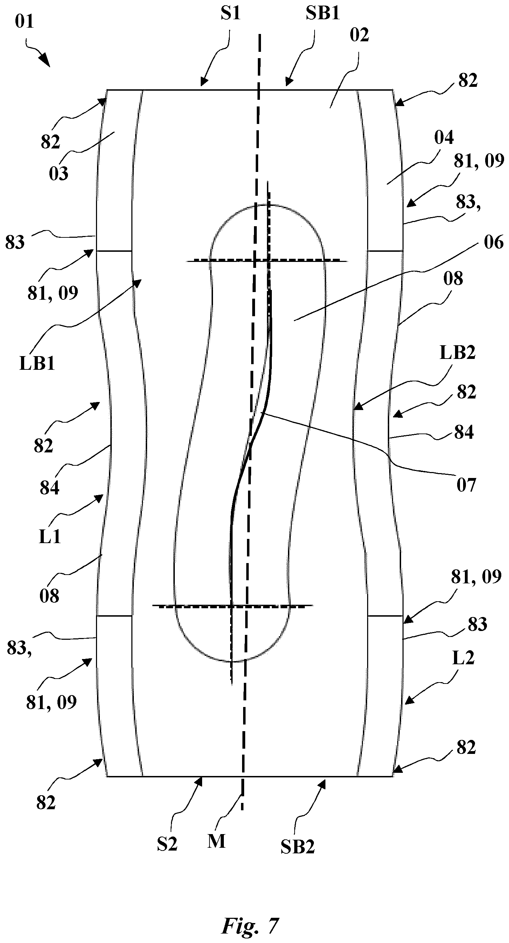

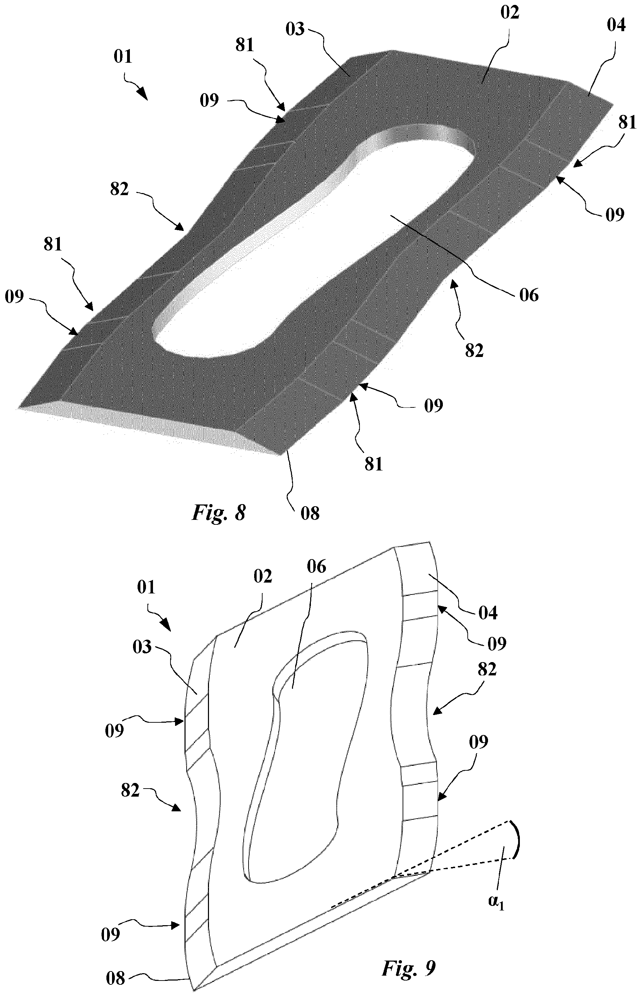

Die **Figuren 7-9** zeigen eine dritte Ausführungsform einer erfindungsgemäßen Klinge 01. Die dritte Ausführungsform einer erfindungsgemä-ßen Klinge 01 unterscheidet sich von den zuvor gezeigten Ausführungsformen einer Klinge 01 insbesondere dadurch, dass die Klinge 01 als Wellenklinge ausgebildet ist. Die als Wellenklinge ausgebildete Klinge 01 weist zwei wellenförmige Schneidkanten 03, 04 auf. Die wellenförmigen Schneidkanten 03, 04 der Wellenklinge umfassen Wellenberge 81, die durch einen Außenbogen der Schneidkante 03, 04 gebildet sind, und Wellentäler 82, die durch einen Außenbogen der Schneidkante 03, 04 gebildet sind. Dabei ist es aus den Figuren 7 bis 9 ersichtlich, dass der Verlauf der beiden an den Längsseiten L1, L2 der Klinge 01 befindlichen wellenförmigen Schneidkanten 03, 04 jeweils mit einem Wellental 82 beginnt und abschließt. Die Schneidkanten 03, 04 der Wellenklinge weisen zudem jeweils zwei Wellenberge 81 auf, wobei die Wellenberge 81 einen Schneidbereich 09 ausbilden, so dass die Klinge 01 insgesamt vier Schneidbereiche 09 umfasst. Der Schneidbereich kann sich über den gesamten Wellenberg erstrecken und den Hochpunkt 83 des Wellenbergs 81 einschließen. Die Klinge 01 ist zumindest im Bereich der Schneidbereiche 09 aus einem Material ausgebildet, das einen höheren Härtegrad als die Basis 02 aufweist. Durch die Ausbildung der Klinge 01 als Wellenklinge und die damit verbundene Ausbildung von Wellentälern 82, die sich bis zu ihrem jeweiligen Tiefpunkt 84 in Richtung der Mittelachse M erstrecken, kann das Schnittgut durch die Klinge 81 mitgenommen und abgeführt werden.

Im Übrigen entspricht die Klinge 01 der dritten Ausführungsform nach den Figuren 7 bis 9 derjenigen nach Figur 4, weshalb zur Vermeidung von Wiederholungen auf die diesbezügliche Beschreibung verwiesen wird. Insbesondere ist eine der Kurve 07, die bevorzugt sinusförmig ausgebildet ist, folgende Aussparung in die Basis 02 eingebracht.

### Bezugszeichenliste

- 01: Klinge
- 02: Basis
- 03: Schneidkante
- 04: Schneidkante
- 05: Fase
- 51: Fasenseite
- 06: Aussparung
- 07: Kurve
- 08: Schneide
- 09: Schneidbereich
- 10: Klingensystem
- 11: Befestigungsmittel
- 12: Befestigungselement
- 13: Schraube
- 14: Gewindeabschnitt
- 20: Mähwerk
- 21: Bohrung
- 22: Innengewinde
- 23: Halteelement
- 81: Wellenberg
- 82: Wellental
- 83: Hochpunkt
- 84: Tiefpunkt

- L1: Längsseite Klinge
- L2: Längsseite Klinge
- S1: Stirnseite Klinge
- S2: Stirnseite Klinge
- LB1: Längsseite Basis
- LB2: Längsseite Basis
- SB1: Stirnseite Basis
- SB2: Stirnseite Basis

- α: Schneidwinkel
- β: spitzer Winkel

- Di: Innendurchmesser
- Da: Außendurchmesser

- M: Mittelachse
- s: Stärke

## Patentansprüche

1. Klinge (01) aufweisend eine Basis (02) und zumindest eine an einer Seite (SB1, SB2, LB1, LB2) der Basis (02) angeordnete und mit der Basis (02) verbundene Schneidkante (03, 04),
**dadurch gekennzeichnet,**
**dass** die Schneidkante (03, 04) zumindest bereichsweise einen ersten Härtegrad und die Basis (02) einen zweiten Härtegrad aufweist, wobei der erste Härtegrad der Schneidkante (03, 04) größer ist als der zweite Härtegrad der Basis (02).

2. Klinge nach Anspruch 1,
**dadurch gekennzeichnet,**
**dass** die Schneidkanten (03, 04) mindestens zwei gegenüberliegende Seiten (S1, S2, L1, L2) der Klinge (01) ausbilden.

3. Klinge nach Anspruch 1 oder 2,
**dadurch gekennzeichnet,**
**dass** die Klinge (01) als Wellenklinge ausgebildet ist,

4. Klinge nach Anspruch 3,
**dadurch gekennzeichnet,**
**dass** die Schneidkante (03, 04) im Bereich eines Schneidbereichs den ersten Härtegrad aufweist.

5. Klinge nach Anspruch 1 oder 2,
**dadurch gekennzeichnet,**
**dass** die Basis (02) und die zumindest eine Schneidkante (03, 04) miteinander verschweißt sind und/oder die Basis (02) und die zumindest eine Schneidkante (03, 04) aus unterschiedlichen Metallbändern hergestellt sind.

6. Klinge nach einem der Ansprüche 1 bis 4,
**dadurch gekennzeichnet,**
**dass** zumindest eine Längsseite (L1, L2) der Klinge (01) mit einer Stirnseite (S1, S2) der Klinge (01) durch eine Rundung und/oder Fase (05) verbunden ist.

7. Klinge nach einem der Ansprüche 1 bis 6,
**dadurch gekennzeichnet,**
**dass** in die Basis (02) eine die Klinge (01) durchgreifende Aussparung (06) eingebracht ist.

8. Klinge nach Anspruch 7,
**dadurch gekennzeichnet,**
**dass** die Aussparung (06) schlitzförmig ist und/oder eine Bohrung ist und/oder sich die Aussparung (06) entlang einer Kurve (07), insbesondere einer sinusförmigen Kurve, erstreckt.

9. Klingensystem (10) aufweisend eine Klinge (01) nach einem der Ansprüche 1 bis 8 sowie ein Befestigungselement (11), das bevorzugt eine Distanzbuchse ist, und ein Befestigungsmittel (12), das bevorzugt eine Schraube (13), insbesondere eine Normschraube, ist, wobei das Befestigungselement (11) und/oder das Befestigungsmittel (12) die Klinge (01) zur Befestigung der Klinge (01) an einem Halteelement (23) des Mähwerks (20) durchgreifen.

10. Klingensystem nach Anspruch 9,
**dadurch gekennzeichnet,**
**dass** das Befestigungsmittel (12) und/oder die Basis (02) einen geringeren Härtegrad als das Befestigungselement (11) aufweisen.

11. Klingensystem nach Anspruch 9 oder 10,
**dadurch gekennzeichnet,**
**dass** das Befestigungselement (11) das Befestigungsmittel (12) umgreift.

12. Klingensystem nach einem der Ansprüche 9 bis 11,
**dadurch gekennzeichnet,**
**dass** das Befestigungselement (11) einen minimalen Innendurchmesser aufweist, der größer ist als der Außendurchmesser des Befestigungsmittels (12), so dass das Befestigungsmittel (12) zumindest teilweise in das Befestigungselement (11) einschiebbar ist.

13. Klingensystem nach einem der Ansprüche 9 bis 12,
**dadurch gekennzeichnet,**
**dass** die Klinge (01) gegenüber dem Befestigungsmittel (12) und/oder dem Befestigungselement (11) radial und/oder axial frei beweglich ist.

14. Klingensystem nach einem der Ansprüche 9 bis 13,
**dadurch gekennzeichnet,**
**dass** die Klinge (01) derart an dem Befestigungselement (11) angeordnet ist, dass die Klinge (01) bei örtlicher Festlegung der Klinge (01) am Halteelement (21) um das Befestigungselement (11) rotierbar ist und/oder gegenüber dem Befestigungselement (11) verschiebbar ist.

15. Mähwerk (20) mit einem Halteelement (21) aufweisend eine Klinge (01) und/oder ein Klingensystem (10) gemäß einem der vorhergehenden Ansprüche.
